# EUROPEAN PATENT APPLICATION

(11) **EP 0 661 878 A2**
(43) Date of publication of application: **05.07.1995**
(21) Application number: 94309179.3
(22) Date of filing: 09.12.1994
(51) Int. Cl.: H04N 7/00, H04M 3/50, H04M 11/08

(54) **A network-based system enabling image communications**

(30) Priority: 29.12.1993 US 175022
(71) Applicant: AT&T Corp., New York, NY 10013-2412 (US)
(72) Inventor: Merritt, Andrew, Orange, New Jersey 07050 (US); Rosen, Kenneth H., Middletown, New Jersey 07748 (US)
(74) Representative: Johnston, Kenneth Graham

(57) **Abstract**

A system is disclosed which enables a multitude of dissimilar end-system devices, appliances, and platforms to interchange image information. The inventive method utilizes a directory database (24) of end-user profiles, a session manager (22), a conversion manager, individual conversation processors, a queuing database, and a store-and-forward file-folder database. The system accommodates pre-subscribed end-users as well as non-subscription users. The system handles both real-time and store-and-forward communications modes. The present invention may be practiced as either a one-node or a multi-node distributed architecture, scalable as required, and may be either network-based or premises-based, or a hybrid combination of these. Communications transport both into and out of the node(s) can range from voiceband telephone on analog circuits to high speed channel or fact-packet protocol communications modes.

## Description

### Technical Field

The present invention relates generally to a method for image communications, and more particularly, to a method and system for communicating images across a network among users with disparate end systems running potentially dissimilar image protocols and formats.

### Background of The Invention

The problem of image file format compatibility has been an issue since the beginning of computer-based processing of even the most basic graphics. Each computer and software vendor developed a different approach to representation of graphics and images, often suited to a particular application area. For example, vendors of word processing systems each developed their own approach for the representation of pictorial information that could be incorporated in files generated by their platforms.

As end users began to network microcomputers, first over departmental local area networks, and then over wider area networks, the problem of file format compatibility began to grow. Today, with the widespread introduction of image, multimedia, and video systems, file format compatibility is a major issue in system development and operation.

A number of solutions to this problem have been introduced or proposed. At the applications level, file import and file export functions have been added which accommodate a few formats that are different from the active format of the application platform itself. The second solution has been the introduction of software which does nothing but convert one file format to another. A third solution is to convert all files to an intermediary format, which then can be used as the "universal language" among dissimilar systems, and then converted to a different native file format at a receiving end-user.

These approaches have proved useful in and of themselves for a number of situations, but as imaging applications become more prevalent, image processing software continues to evolve, image communications becomes more feasible over a wider range of system applications, and concomitantly as the need for and use of image communications increases, it becomes ever more difficult and costly for users to maintain updated premises software. Further, the requirement of converting between a multitude of formats and protocols serves as an impediment to widespread access and use of image communications.

### Summary of The Invention

The present invention overcomes the above, and other, limitations by providing a system which enables a multitude of dissimilar end-system devices, appliances, and platforms to interchange image information. In an embodiment of the present invention, a network-based image processing system includes a network-based data base which holds profiles of the end users. The profiles typically include the capabilities of the end systems of the subscribing end users for storing, processing, and displaying images, preferably including the acceptable and preferred image protocols, compression methods, and image formats for each user. A communication of an originating image from a calling party to a called party is diverted to the network-based image processing system. The network-based image processing system ascertains whether the originating image file format and protocol matches the called party preferred file format and protocol, which is stored in the data base. If there is no match, the processing system appropriately converts the originating image file to the format and protocol of the called party. The image file is then communicated to the called party. A handshake-like exchange may be used to enable image communications of parties that are not subscribers and do not have profiles in the database. In a further embodiment, the network-based nodal image processing system provides for file return to the called party. The method and system of the present invention may be applied in systems ranging from local premises-based communications to wide area communications on either private or public networks.

### Brief Description of The Drawings

The invention will be described in greater detail below by way of reference to the accompanying drawings, wherein:
FIG. 1A shows a generic configuration of an image communication system in accordance with practicing the present invention;
FIG. 1B is an operational flow chart of an exemplary process for image communications, in accordance with the present invention;
FIG. 2 shows a configuration of an image communication system in accordance with practicing the present invention; and
FIG. 3A, FIG. 3B, FIG. 4A, FIG. 4B, FIG. 5, and FIG. 6 illustrate different information flow sequences in accordance with practicing the present invention for the system depicted in FIG. 2.

### Detailed Description of The Preferred Embodiment

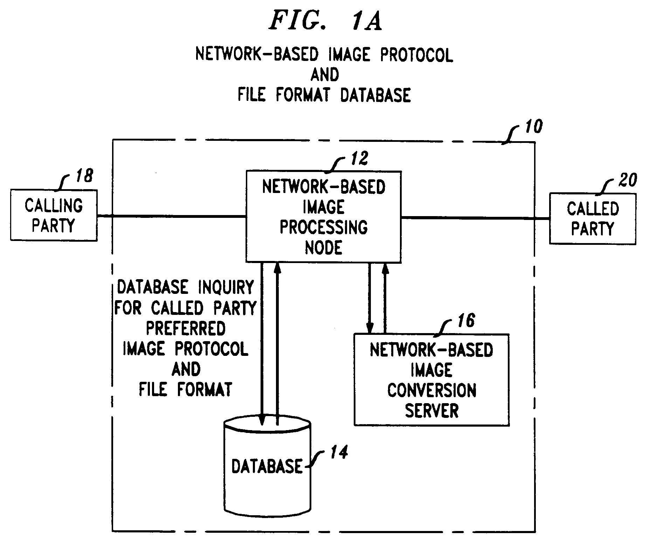

Figure 1A diagrams a generic system configuration in accordance with practicing the present invention, and is not limited to any particular network, but may represent for example, a private/premises-based network, or a public network such as a public switched telecommunications network (PSTN). As shown in FIG. 1A, a network-based image communications processing system 10 includes an image processing node 12, a database 14, and an image conversion server 16. Preferably, the database 14 maintains information for image service subscribers. As understood by one skilled in the art, such a system may be implemented as either a one-node or a multi-node distributed architecture, scalable as required, and may be either network-based or premises-based, or a hybrid combination of these. In a multi-node distributed architecture, preferably a plurality of image processing nodes 12, each which supports the image communications protocol, would access a centralized database 14, while a separate image conversion server 16 preferably would be located at each node and be accessible to other nodes via a gateway or bridge. If the network were to represent the AT&T interexchange network, for example, in addition to other possible network elements that are known to one skilled in the art, such a node may be implemented in accordance with one or more of the following elements: an adjunct processor (AP) (e.g., a network services complex "NSCx"), a network switch (e.g., 4ESS or 5ESS), and a service control point (SCP) (e.g., a network control point "NCP"). Such elements are well known in the art, as is their adaptation for implementing functions and services. As understood by one skilled in the art, overall system requirements will affect the preferred physical implementation of a network-based image communications system, and there are many variations and adaptations within the purview of the present invention.

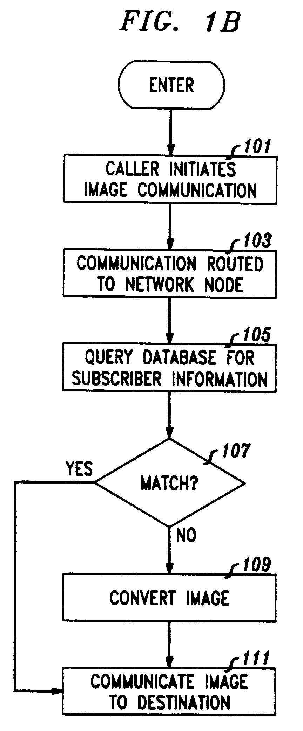

In accordance with the present invention, FIG. 1B illustrates an operational flowchart for a method of image communications. In step 101, a calling party 18 initiates an image communication to called party 20. This communication arrives at the network image processing node 12 (step 103), and the originating party's sending file format and protocol is compared to the preferred profile for the terminating party through a look-up procedure in the network-based database 14 (step 105). Next, in step 107, if the originating and terminating file formats match, then a direct communications channel (e.g., virtual circuit or direct circuit switched) is established between the respective parties (step 111). If the originating and terminating image file formats do not match, however, then the network-based service will invoke and attach image converter server 16 which will perform the necessary file format and protocol conversions (step 109), followed by establishing a connection to the called party (step 111) for communicating the converted file. The foregoing sequence of events may occur in real-time or may be implemented in a "store-and-forward" communications, in which the image data to be sent to the called party is temporarily stored within the network, and forwarded to the called party at a later time. It is further understood that the network may determine the format and protocol of the calling party image either by looking up this information in the database 14 during communication setup, or directly from the image data transmission, using either in-band or out-of-band signaling.

It is also understood that routing of the initial communications to the node in step 103 may occur in a variety of ways depending on the type of network with which the present invention is practiced, as well as the communications protocol. For example, if the network is the AT&T network and the calling device includes a modem, for example, then nodal access may occur via switched access using, for example, an 800 number or other special access code, or via a direct-network connection. On the other hand, if the network is a private network, then a special access code also may be used or the communications protocol may include a means for indicating that the data to be communicated is image data.

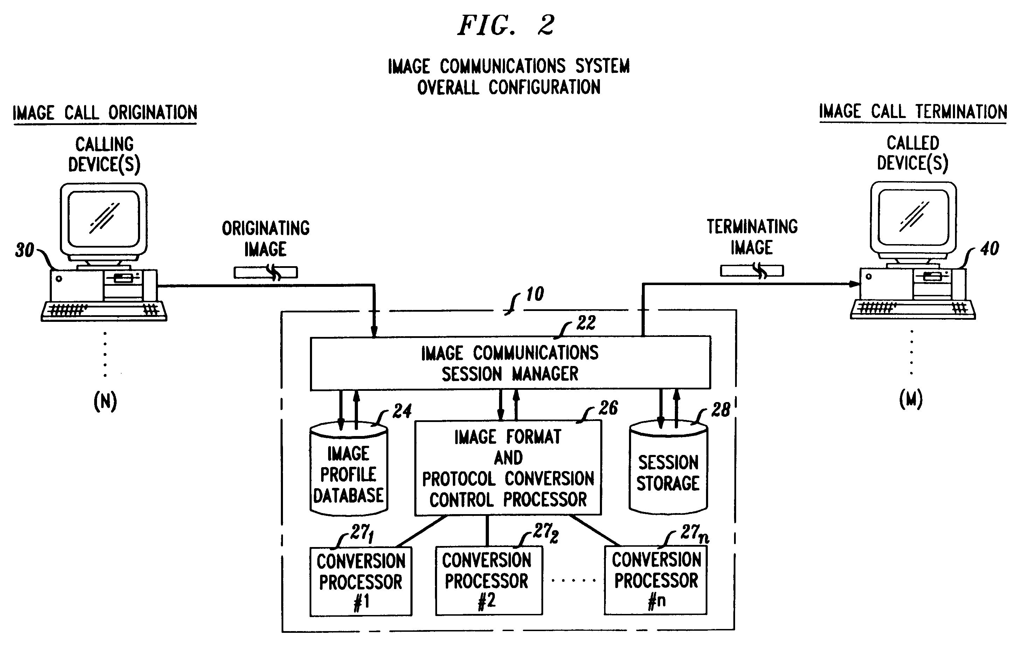

The present invention may further be understood with reference to the embodiment shown in FIG. 2, which further illustrates elements of a nodal image communications system, and particularly a network-based image communications processing system 10, in accordance with practicing the present invention. Referring to FIG. 2, at a network node, a number of discrete servers are networked on a data link such as an Ethernet or FDDI (i.e., fiber distributed data interface) bus. As schematically depicted, more than one calling device 30 may access the network by any of a variety of means, including switched access or direct-network connection, and the network may connect to a called device 40 by any of a similar variety of means. It is understood that the servers, schematically depicted in FIG 2A, generally comprise one or more physical devices having hardware and/or software to accomplish the herein described functions. In a most basic implementation, a single network node includes all servers; more generally, the servers may be distributed as determined by existing or desired system architecture, desired system performance, etc. Preferably, each of the servers include the following respective functions.

The session manager server 22 provides for input/output queuing of image conversion requests, and for login and password management of the incoming (call originating) party. It also stores (queues) the incoming image file(s) until processing is required (e.g., conversion), as well as the output file(s), which may be either held in session storage device 28 for future store-and-forward to the called party, or sent immediately after processing is completed. As an example of the types of hardware and software that must be supported to implement these functions, the session manager server 22 includes modem banks, e-mail support software, interfaces to voice-mail, memory storage devices, one or more programmable computers or workstations, programmable switches, etc.

The profile database server 24 provides a platform for the Subscriber Profile Database. This database contains a multi-parameter field for each subscriber, the elements of which describe the image file formats and protocols that can be accepted by this subscriber, as well as the preferred file format and protocol.

The image file format conversion server converts the calling party image file to the acceptable Or preferred image file format of the called party, depending on the option(s) selected by the calling party. This server preferably includes conversion control processor 26 and one or more conversion processors 27₁, 27₂ . . . 27ₙ. Additional image servers may provide other services, such as Image Catalog, Optical Character Recognition, Archiving, Image Transaction Processing such as conversion to EDI (Electronic Data Interchange, CCITT X.12 Standard) or to batch data files for host entry, image groupware and image workflow, and bridging for image conferencing. Such applications may be provided by commercial application programs executed by the servers, or special purpose application software and hardware may be developed as necessary. As can be appreciated by one skilled in the art, the nodal service permits a large library of image processing software to be maintained and shared economically by many users.

In addition, the nodal image communications system may include other servers for providing additional functionality and services. For instance, an e-mail confirmation-back server may be used for sending out an e-mail message to the calling party regarding the disposition of the image being sent to the called party. Namely, that a file conversion was needed, was executed successfully, was forwarded to the calling party, and was received (file accessed) by the calling party. Also, as an adjunct or alternative to the e-mail confirmation-back server, a voice-mail confirmation-back server may inform the calling party of the same or similar actions, but through voice-mail messaging.

The nodal image communications system also preferably includes a gateway/bridge for connection to other network nodes which also provide network-based image processing. Such gateways provide for load distribution and balancing, but also for some specialized image processing services. The gateways may also connect to external systems.

In addition to the above Server functions, there are several access modes for the image nodal processor depicted in Figure 1A. A preferred implementation is access from a PC or workstation, utilizing a protocol such as TCP/IP (Transmission Control Protocol/Internet Protocol). This access could be through a router/hub interface or directly from the workstation utilizing software such as SLIP (Serial Line Interface Protocol). At the low end, access into the nodal server is via a FAX/modem, in CCITT (ITU) Group 3 file format. In this case, there would preferably be provided an audio response unit which receives multifrequency tone (e.g., DTMF) entries from the calling party, and issues voice messages that elicit these tone responses. Whatever the access into the nodal server, these various front-end implementations pass files to the session manager 22.

In accordance with the present invention, image communication preferably occurs in one of two modes--the real-time mode or the store-and-forward mode. Real time implies that once the image data is transmitted from the calling device, there is no storage of the image data, or its derivatives, for transmission at a predetermined later time. In contrast, in the store-and-forward mode files converted at the node are held at the node until a predetermined later time at which they are sent to the designated called party. Designating one of these modes may be an option available to the caller, although the network itself may determine the mode according to factors such as traffic and/or queue conditions on the network, and the amount of image processing required. In addition, the store-and-forward mode may be the default mode, or presented to the caller as an option, when a connection cannot be made to the called party (e.g., busy signal). Also, the mode may be designated as a preferred mode of reception option that is specified by a subscriber and stored in the image profile database.

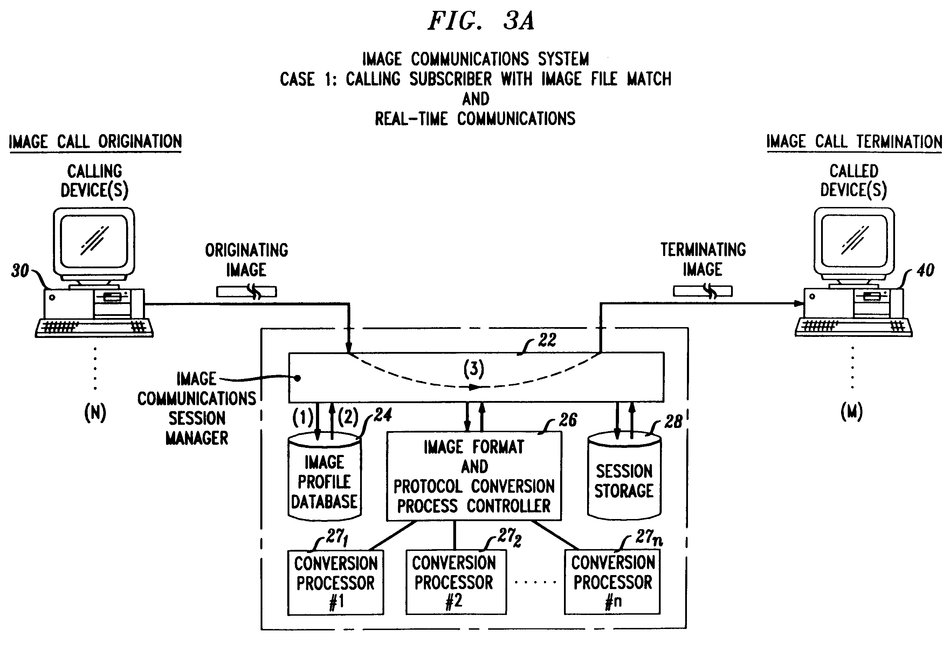

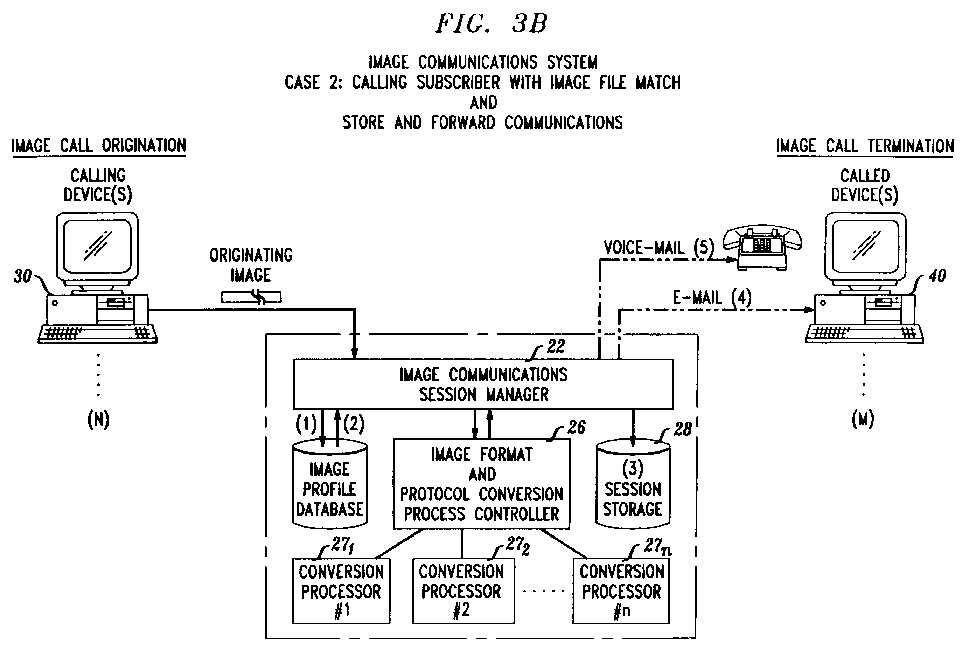

The present invention, and the foregoing system elements and their related functions, may be better understood with reference to FIGS. 3A-6 which further illustrate nodal image communications according to the present invention.

FIG. 3A illustrates the signaling which occurs when a calling subscriber 30 initiates an image communication with an image file match to the called device 40, and wherein the communication occurs in real time. Such a call may be initiated via in-band or out-of-band signaling, and is routed to the image nodal processor (e.g., a network node). The image communications session manager 22 accesses the image profile database 24 to ascertain whether the originating image format and protocol matches that used or preferred by the called device. In this instance, since there is a match, the image communications session manager 22 establishes a connection between the calling device 30 and the called device 40, and the image is transmitted according to the predetermined transmission protocol using the originating image format.

FIG. 3B illustrates the signaling which occurs when a calling subscriber initiates an image communication with an image file match to the called device, and wherein the communication occurs using the store-and forward mode. As discussed above, the store-and-forward mode may be selected by the calling party, or may occur as in response to a failed attempt in connecting to the called party. For instance, in response to the call arriving at the image nodal processor, the image communications manager 22 may direct an audio response unit to prompt the caller to enter the preferred communications mode using the touch-tone keypad on a telephone station or by entering a response from the keyboard of the calling device (e.g., personal computer, workstation, etc.). The sequence of events initially proceeds as in the case illustrated in FIG. 3A, with a match being indicated by the query of image profile database 24. However, instead of immediately establishing a connection to the called device, the image communications session manager establishes a connection from the calling device to the session storage device which stores the converted image data. The image communications session manager then initiates a communication, by voice-mail and/or e-mail for example, to the called device station using a station identifying number (e.g., phone number) stored in the image profile database 24. This communication indicates that an image file is stored at the image nodal processor.

Preferably, in order to retrieve images from the image communications system, the user accesses the image nodal processor via a special access number (e.g., an 800 number). Once the user is connected to the image nodal processor, the user may be identified by entering a personal identification number (PIN) in response to a prompt by the audio response unit, or a distinguishable 800 number may be assigned to each user. The caller then interacts with the image nodal processor, again preferably via the audio response unit or a terminal connection, to access any files stored in the user's file-folder. The selected files are then retrieved from the storage device and transmitted to the user.

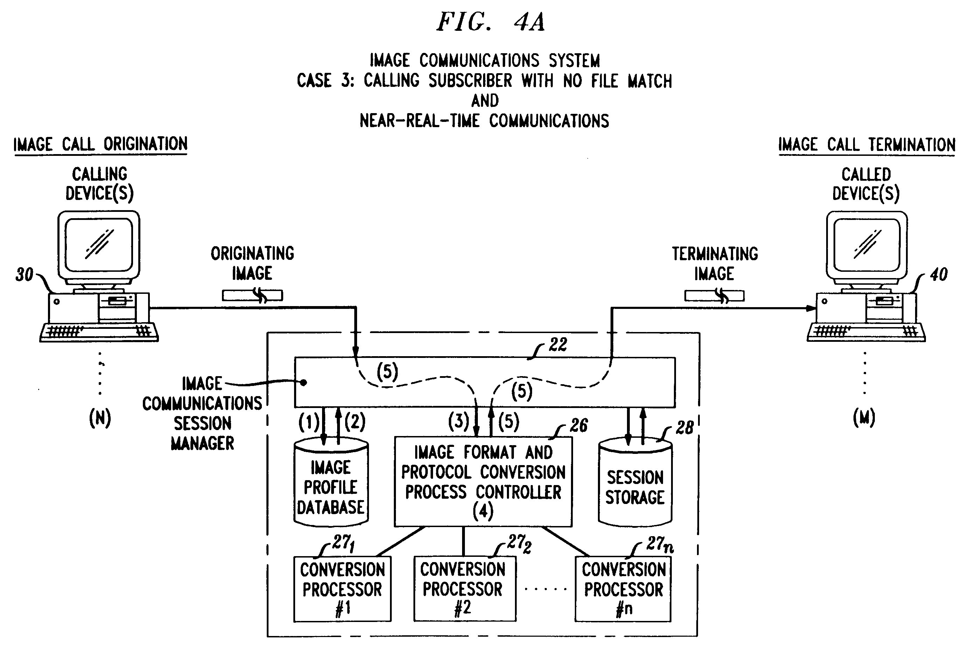

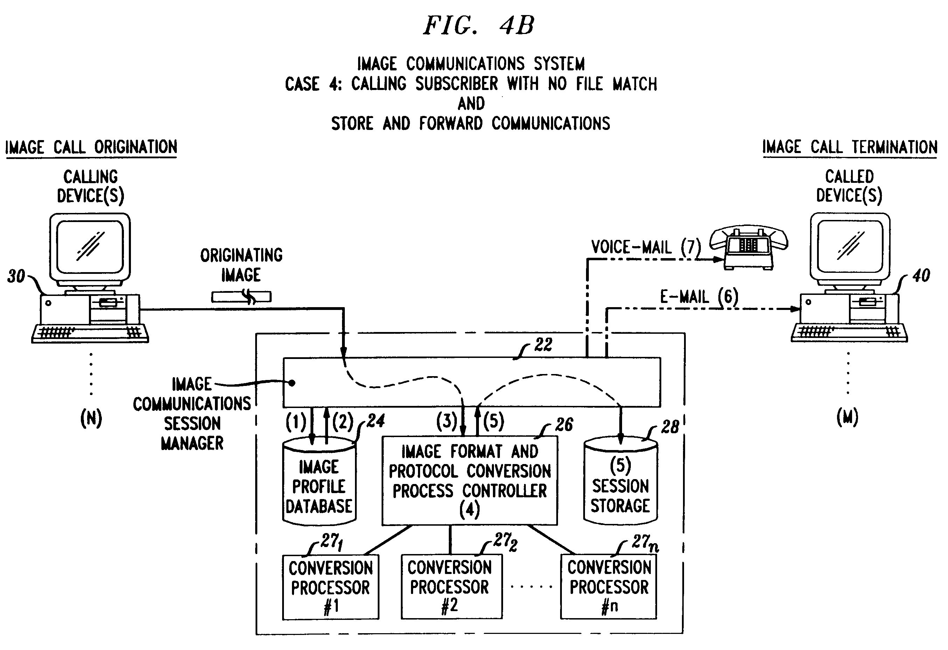

FIG. 4A illustrates the information flow which occurs when the originating image does not match the format and protocol of the called device. In this case, since access of the image profile database 24 indicates that there is no match, the image communications session manager 22 provides the image format and protocol conversion process controller 26 with the format and protocol of the called device. The image communications session manager 22 then routes the originating image to the image format and protocol conversion process controller 26 which, in turn, routes the image data to an appropriate conversion processor. The conversion process controller 26 selects an appropriate conversion processor based on factors such as functionality, as well as availability and load balancing (e.g., queue management). Originating image data that has been converted is then routed to the called device via the conversion process controller 26 and the image communications session manager 22. If such a call occurs in the store-and-forward mode then the converted data is output to the session storage device 28 (FIG. 4B), and the image communication session manager 22 then initiates a communication to the called device (e.g., voice-mail or e-mail) indicating that a file has been stored.

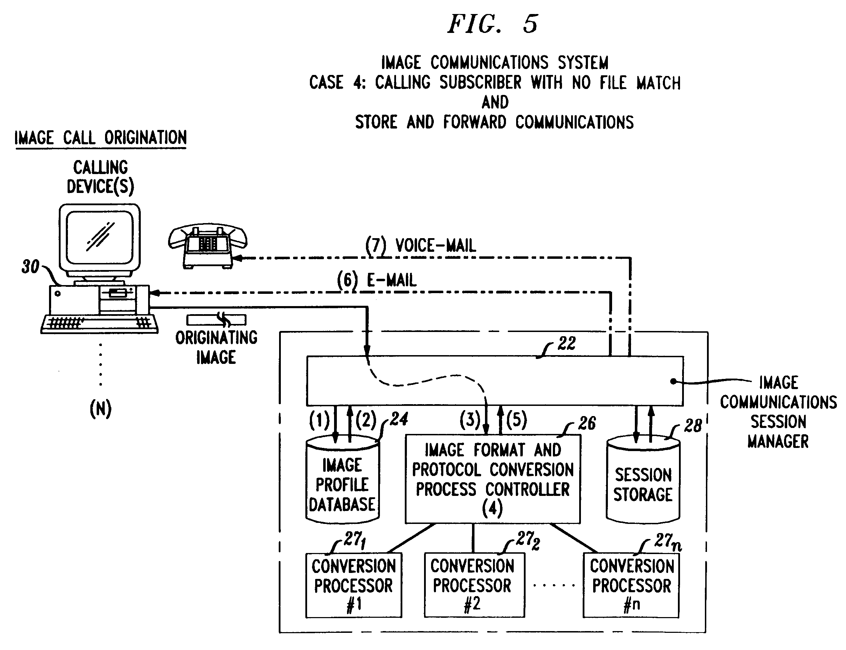

FIG. 5 illustrates the information flow which occurs when the originating image does not match the preferred format and/or protocol of the terminating device, and the file cannot be converted by the nodal image processor. In such an instance, as above, the communications session manager 22 first receives the originating image communication, and queries the image profile database 24, determining that a conversion is required. The conversion information and the originating image are provided to the conversion process controller 26 which ascertains that the originating image cannot be converted by the conversion processors due to incompatibility or error. The conversion process controller 26 signals this error condition to the communications session manager 22 which then launches an e-mail or voice-mail message to the calling device 30, indicating that the communication could not be completed because the file was non-convertible.

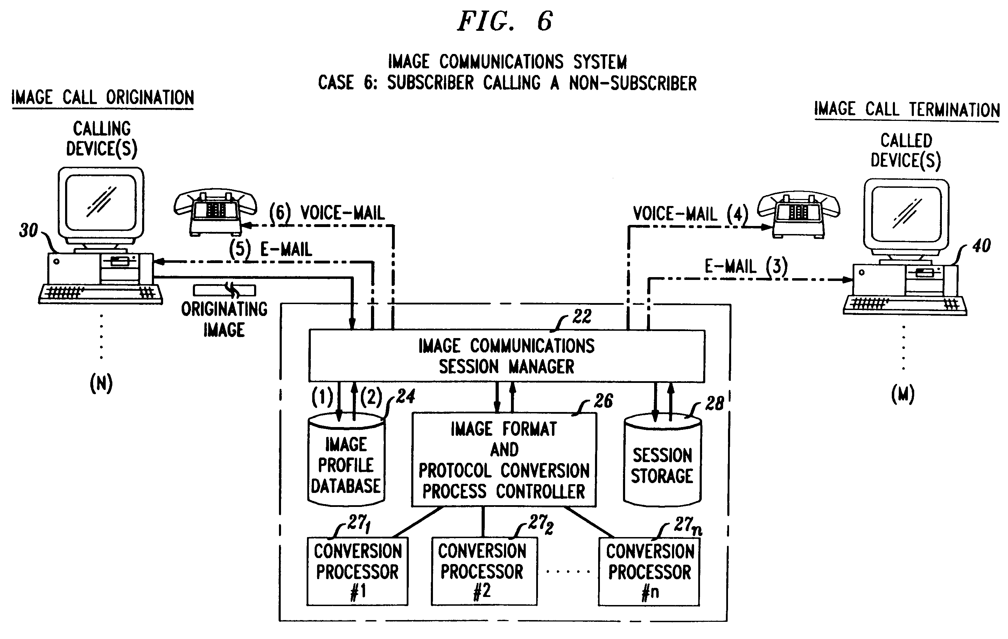

Another illustration of the processing and signaling performed by the network-based image processor is illustrated by FIG. 6, wherein a subscriber attempts to send an image to a non-subscriber. In this case, the query to the image profile database 24 indicates that the called party is not a subscriber, and therefore, since there is no information regarding protocol and format of the called device 40 a conversion (if required) and communication is not performed. A voice-mail or e-mail message, or both, indicating an attempted image communication thereto, is sent to the called device 40. A message back to the calling device, indicating the failed attempt, is also preferably communicated via e-mail or voice-mail. In a further embodiment, before leaving a voice-mail or e-mail message, the communications session manager 22 may attempt to complete a call to the called device 40 and, via the audio response unit, indicate that an image communication is pending from calling device 30 (e.g., using calling party automatic number identification "ANI"), and inquire whether receipt is desired, and if so, what type of format and protocol is desired for receiving the image communication. Then the nodal image processor may perform the image conversion and communication as described hereinabove.

In accordance with the present invention, file return to the initiating user is also provided. As opposed to transmitting an image to a called party, a subscriber may transmit an originating image to the nodal image processor for image processing, and then receive the processed output image. For example, a secretary may desire to convert the FAX of several pages to a particular word processing format. An illustrative embodiment for effecting file return is for the calling party 30 to dial a special access number (e.g., 800/900 number) for accessing the network-based nodal image processor; for example, this could be the same number used for file retrieval. The communications session manager 22 then interacts with the user via the audio response unit (or a terminal connection), providing the subscriber with a series of prompts in order to ascertain, as evinced by the subscribers responses, the type of processing desired by the subscriber. For example, the first prompt may determine whether the subscriber wishes to retrieve a file or use the file return processing functions. If the user selects the latter, then the audio response unit may query the type of function desired (e.g., optical character recognition, file conversion, etc.). As understood by one skilled in the art, the image data communications protocol and/or format may include information concerning the type of conversion to be performed (e.g., the type of format of the originating image, terminating image, type of file conversion, etc.), in which case queries by the audio response unit would not be required for this information. After establishing the desired processing, the file is sent to the image nodal processor for performing the desired function, and then returned to the subscriber either directly or using the store-and-forward mode.

The foregoing illustrations are demonstrative of the myriad services which may be provided by the present invention. It can be understood that the present invention allows image communications among dissimilar end systems, as well as subscriber access to image processing services, including personal computers supporting a range of image protocols, image phones, facsimile machines, dialable video services, optical character recognition, media conversion/image translation services, and PDAs (i.e., personal digital assistants), and can be practiced in environments ranging from local premises-based communications to wide area communications on either private or public networks, and thus has wide applicability not limited to the hereinabove disclosed embodiments.

Dialable video services may include conversions among various video standards and among different video performance levels. A specific example is a teleconferencing application in which a 64 Kb/sec codec at one location needs to connect to a codec at another location that adheres to another video standard, say MPEG (Motion Picture Experts Group) at 1.5 MB/sec. If based on the nationwide telecommunications network, a toll switch (e.g., 4ESS) mediates call setup and diversion to the image nodal processor platform. At this platform, conversion among the two video formats takes place entirely within the digital domain, without returning to baseband analog video, as is commonplace for current video conversions. If both codecs use the same speed, then the platform can be used for other services, such as compression, or administrative functions. Administrative features could include managing multi-location access, reservations, encryption keys, and video testing and maintenance.

Although the above description provides many specificities, these enabling details should not be construed as limiting the scope of the invention, and it will be readily understood by those persons skilled in the art that the present invention is susceptible to many modifications, adaptations, and equivalent implementations without departing from this scope. For instance, if the called party is not a subscriber, then the network may obtain the preferred format and protocol by prompting the called party. In addition, the called party may have certain on-site image processing capabilities while lacking others, and therefore, such a subscriber may only subscribe to certain image processing services. Further, if the image profile database includes information such as whether a subscriber has image decompression utilities available, or whether the subscriber only requires and/or desires less than all the originating image data for certain types of data, then the nodal image processor can appropriately compress the image transmitted to such a subscriber. An additional feature which may be practiced in accordance with the present invention is for a subscriber to specify a set of non-subscribers from whom the subscriber wishes to receive image communications. This specified information would be stored in the subscriber image profile database, and used to effectuate image communication from a specified non-subscriber to a subscriber. Also, the present invention may include batch image processing with delayed store-and-forward distribution. This distribution may be to one or more widely separated locations. For example, a law firm may wish to convert hundreds of pages of printed text to a word processing format, with both return to the originating office (e.g., file return) and transport to a remote location. Moreover, as discussed above, access and communication to the network may be effected in a variety of ways, using a variety of network formats and protocols. These and other changes can be made without departing from the spirit and the scope of the invention and without diminishing its attendant advantages. It is therefore intended that the present invention is not limited to the disclosed embodiments but should be defined in accordance with the claims which follow.

## Claims

1. A network-based method for communicating an image from a calling device to a called device comprising the steps of:
receiving a signal from said calling device;
comparing characteristics of said image with said called device information;
converting said image when said comparing step indicates that characteristics of said image are different from said image characteristic information of said called device, thereby generating a converted image;
communicating information to said called device, said information including said converted image when said converted image is generated in said converting step, said information including said image when said converted image is not generated in said converting step.

2. The method according to claim 1, wherein said called device is said calling device.

3. The method according to claim 1, further comprising the step of communicating said converted image to said calling device.

4. A network-based method for communicating an image from a source device to at least one destination device, said source device operative in selecting said at least one destination device, comprising the steps of:
receiving a signal from said source device;
processing said image according to said signal, thereby generating a processed image;
communicating said processed image to said at least one destination device.

5. The method according to claim 4, wherein said at least one destination device includes said source device.

6. The method according to claim 4, further comprising the steps of
signaling an information request to said source device; and
receiving a reply signal in response to said information request, said reply signal operative for selecting the type of said processing.

7. A network-based image processing system for communicating an image from a calling device to a called device comprising:
means for storing called device information, called device information including image characteristic information of said called device;
means for receiving a communication of said image from said calling device;
means for comparing characteristics of said image with said called device information;
means for processing said image in response to said comparing means, thereby generating a processed image;
means for communicating said processed image or said image to said called device.

8. The network-based image processing system of claim 7, wherein said called device is said calling device.

9. The network-based image processing system of claim 7, wherein said means for processing includes the function of format conversion.

10. The network-based image processing system of claim 7, wherein said means for processing includes the function of image compression, or of optical character recognition.

11. The network-based image processing system of claim 7, further comprising a means for storing said processed image, and/or a means for retrieval of said processed image by said called device.
